(19) Europäisches Patentamt
European Patent Office
Office européen des brevets

(11) Numéro de publication: **0 023 872**
**A1**

# (12) DEMANDE DE BREVET EUROPEEN

(21) Numéro de dépôt: **80401141.9**

(22) Date de dépôt: **01.08.80**

(51) Int. Cl.³: **C 04 B 13/00**, C 04 B 13/14

(30) Priorité: **03.08.79 FR 7919960**

(43) Date de publication de la demande: **11.02.81**
**Bulletin 81/6**

(84) Etats contractants désignés: **AT BE CH DE GB IT LI LU NL SE**

(71) Demandeur: **SETEC-GEOTECHNIQUE, Tour Gamma D 58, Quai de la Râpée, F-75583 Paris Cedex 12, Seine (FR)**

(72) Inventeur: **Prandi, Erio, 9 Rue de Bassano, F-75116 Paris (FR)**

(74) Mandataire: **CABINET BONNET-THIRION, 95 Boulevard Beaumarchais, F-75003 Paris (FR)**

(54) **Procédé de fabrication d'éléments de construction à partir de sulfate de calcium hydraté, résidu de traitement de phosphate calcique.**

(57) L'invention concerne les éléments de construction préfabriqués par moulage.

Suivant l'invention, on ajoute à une bouillie de phosphogypse, par rapport au poids sec de la composition de 18 à 40% de laitier de haut fourneau, de 0,2 à 0,5% de soude, on mélange dans un malaxeur avant de placer la pâte obtenue dans un moule où elle est fortement comprimée.

Application: fabrication d'éléments de construction tels que blocs creux ou pleins, carreaux, éléments de paroi etc...

EP 0 023 872 A1

Procédé de fabrication d'éléments de construction à partir de sulfate de calcium hydraté, résidu de traitement de phosphate calcique

La présente invention se rapporte, d'une manière générale, à la fabrication d'éléments de construction à partir de sulfate de calcium hydraté, résidu de traitement de phosphate calcique dit ci-après phosphogypse, et d'un liant hydraulique.

On a déjà proposé dans le brevet britannique N° 234 302, se rapportant à des perfectionnements à la fabrication de pierres artificielles d'utiliser du gypse naturel non cuit ou de l'anhydrite, mélangé avec un ou deux laitiers de haut fourneau sous forme de globules ou broyé à sec, et avec addition d'un élément alcalin tel que soude, oxyde de calcium, ou autres.

On remarque dans le brevet en cause que l'on peut utiliser deux laitiers, respectivement broyé et en globules, le laitier broyé pouvant lui-même être remplacé partiellement ou en totalité par du sable.

De plus, si cela s'avère nécessaire, le mélange de laitier et de gypse non cuit, ou d'anhydrite, peut également être complété par l'addition d'un élément alcalin tel que la soude, l'oxyde de calcium, ou une substance analogue convenable.

Il ressort de ce qui précède que dans les compositions envisagées on ne recherche pas de prise du mélange ; il est en outre spécifié, comme avantage important, qu'il n'y a pas de durcissement des blocs moulés obtenus.

Un tel procédé d'obtention de pierres artificielles, obtenues par moulage, nécessite un certain nombre d'opérations distinctes demandant chacune du temps, et l'utilisation de matériaux diversifiés, se répercutant sur le coût du produit fini.

Selon une autre technique enseignée par le brevet néérlandais N° 74 14904 il s'agit d'obtenir un produit moulé et fortement comprimé comprenant du gypse humide mélangé avec du ciment, avec une quantité d'eau adaptée de manière à procurer un léger resserrage, l'eau en trop étant évacuée par séchage des pièces après moulage à une pression de 400 Kgs/cm2.

Dans ce brevet, il est indiqué que l'on utilise un déchet industriel, en l'occurrence du gypse chimique humide jusqu'alors peu utilisé dans la fabrication d'éléments de construction que par des procédés plus ou moins compliqués alors que, selon l'invention, on peut obtenir un produit utilisable par des méthodes simples et bon marché.

On observera que le mélange gypse humide, ciment, eau, nécessite pour l'obtention d'éléments de construction, des opérations, mettant en oeuvre des moyens complexes.

Il résulte globalement de ce qui précède que la fabrication d'éléments de construction moulés et comprimés à partir d'un mélange d'un sulfate de calcium hydraté résidu de traitement de phosphate calcique et d'un liant hydraulique, entraîne une pluralité d'opérations et, partant une consommation d'énergie importante, se répercutant sur le coût du produit fini.

La présente invention a trait à un procédé de fabrication d'éléments moulés et comprimés, suivant lequel en partant d'un matériau habituellement destiné à être mis au rebut, on réalise avec un minimum d'interventions, des éléments de construction ayant des caractéristiques mécaniques remarquables.

A cet effet la présente invention a pour objet un procédé de fabrication d'éléments de construction, à partir d'un sous-produit issu de l'industrie des superphosphates et désigné dans ce qui suit par "phosphogypse".

Le phosphogypse est un sulfate de calcium hydraté (Ca $SO_4$' -2H20) obtenu lors de l'attaque du minerai de phosphate par l'acide sulfurique pour obtenir l'acide phosphorique :

$$3\ Ca3\ (PO_4)_2 + CaF_2 + 10H_2\ -SO_4 + 20H_2O \rightarrow$$

$6H_3 - PO_4 + 10\ Ca\ SO_4,\ 2H2O + 2HF$

On sait que les quantités produites de phosphogypse sont très importantes, du fait que pour obtenir 1 tonne d'acide phosphorique, il faut traiter environ 4 tonnes de minerai de phosphate par 2,5 tonnes d'acide sulfurique conduisant à l'obtention d'environ 5 tonnes de phosphogypse par filtration, lequel phosphogypse ainsi obtenu se présente après filtration sous la forme d'une bouillie acide dont le PH est de l'ordre de 2 à 3.

Jusqu'à maintenant le phosphogypse est utilisé principalement pour l'obtention d'un produit ci-après appelé plâtre artificiel destiné à la réalisation d'éléments de construction préfabriqués par moulage. Mais la fabrication d'un tel plâtre (semihydrate) à partir de phosphogypse en bouillie contenant 30 à 40% d'eau, nécessite de nombreux traitements à savoir :

- pour sa déshydratation une consommation très importante d'énergie de l'ordre de 52500 calories par tonne de plâtre artificiel obtenu ;
- pour la neutralisation de l'acide phosphorique restant et l'élimination des impuretés solubles, il est nécessaire d'effectuer un traitement chimique ;
- pour l'élimination des impuretés insolubles, par tamisage, sédimentation, flottation, il faut avoir recours à une série de traitements mécaniques à l'aide d'installations et d'appareils complexes.

On comprendra qu'un tel processus de fabrication de plâtre artificiel, nécessite des installations complexes ayant une certaine influence sur le coût final du produit obtenu ; de plus les cadences de production sont relativement peu élevées en particulier en raison de la multiplicité d'opérations qui sont nécessaires à l'obtention d'un plâtre artificiel en partant de phosphogypse en bouillie.

Etant donné les grandes quantités de phosphogypse produit d'une part, et les moyens actuellement mis en oeuvre pour l'obtention d'un plâtre artificiel à partir de ce sous-produit provenant de l'industrie des superphosphates d'autre part, il s'en faut, et de loin, que tout le phosphogypse produit soit utilisé. On a alors recours à un stockage sur les terre-pleins des usines de traitement, mais on conçoit qu'inévitablement les terre-pleins en question doivent être débarrassés régulièrement ; pour ce faire on peut prévoir des fosses pour la réception du produit, ou encore transférer ce produit et le déverser en mer, ce qui est le cas le plus fréquent.

Or cette façon de se débarrasser de quantités importantes de phosphogypse peut engendrer une pollution des nappes phréatiques, ou du milieu marin selon le cas.

La présente invention a pour objet principal un procédé de fabrication d'éléments de construction préfabriqués par moulage sous pression, en partant de phosphogypse, avec des moyens de mise en oeuvre extrêmement simplifiés comparativement à la technique antérieure, permettant ainsi la récupération de grandes quantités de phosphogypse, d'où il résulte qu'avec un tel procédé les inconvénients énoncés dans ce qui précède sont supprimés.

Le procédé de fabrication d'éléments de construction par moulage sous pression d'un mélange de sulfate de calcium hydraté résidu de traitement de phosphate calcique dit ci-après phosphogypse, et d'un liant hydraulique, se caractérise en ce qu'on ajoute à une bouillie de phosphogypse neutralisé par une matière basique, en poids par rapport au poids sec de la composition, de 15 à 40% de laitier de haut fourneau de type dit granulé, et de 0,2 à 0,5% de soude en excès sur la neutralisation, on mélange dans un malaxeur et on comprime fortement la composition malaxée dans un moule.

Ainsi qu'on le voit les propriétés des ajouts incorporés au phosphogypse permettent de simplifier considérablement le traitement de ce dernier pour l'obtention d'un produit pâteux prêt à être moulé sous forte pression pour réaliser des éléments de construction, la simplification précitée résultant en particulier du fait qu'un certain nombre d'opérations intermédiaires qui étaient jusqu'ici nécessaires, telles que, repulpage du phosphogypse, criblage, lavage, filtration sous vide, déshydratation, se trouvent supprimées.

D'autre part on remarquera que, suivant l'état de la technique, on utilise le gypse chimique, soit avec des additifs qui n'ont pas d'effet sur la prise, tels que le laitier broyé,

ou des liants hydrauliques actifs en soi tel qu'un ciment Portland, tandis que, suivant la présente invention, on utilise en combinaison le gypse chimique (phosphogypse), un liant hydraulique (laitier, granulé) non susceptible de prise sans un traitement d'activation préalable, et de la soude agissant simultanément comme neutralisant de l'acidité résiduelle du phosphogypse et comme activant de prise du laitier granulé.

Il convient de préciser dès maintenant que les dosages des trois constituants dans le malaxeur peuvent être ajustés en fonction de l'acidité de la bouillie de phosphogypse d'une part, et en fonction des caractéristiques mécaniques souhaitées des éléments de construction à réaliser d'autre part.

En d'autres termes, les dispositions selon l'invention permettent la récupération du phosphogypse pour réaliser, à une cadence de production élevée, des éléments de construction préfabriqués moulés avec une dépense d'énergie considérablement réduite par rapport à la technique antérieure, et avec des moyens de mise en oeuvre limités, en pratique, à un appareil de malaxage et à une presse de moulage.

D'autres caractéristiques et avantages de l'invention ressortiront d'ailleurs de la description qui va suivre, donnée à titre d'exemple, en référence aux planches de dessins annexées dans lesquelles :

la figure 1 montre, sous l'aspect d'un tableau, la technique antérieure de fabrication d'éléments de construction moulés partant de phosphogypse ;

la figure 2 montre également sous l'aspect d'un tableau la technique de fabrication de tels éléments conformément à la présente invention ;

la figure 3 est un graphique montrant la variation de la résistance en compression, du produit obtenu en fonction de la pression de moulage, la composition du mélange, et du temps ;

la figure 4 est un graphique donnant la résistance à la traction par flexion en fonction du temps, de deux produits de composition différente moulés à une même pression .

Le procédé selon l'invention, consiste à mélanger à de la bouillie de phosphogypse, une faible quantité de soude en solution, et à ajouter à ce mélange une quantité relativement

importante de laitier granulé de haut fourneau, lequel est, de manière bien connue un sous-produit de la fonte.

On rappellera que le laitier granulé en cause est obtenu sous sa forme granulée, lorsque, à la sortie du haut fourneau, il est refroidi brusquement par un jet d'eau froide projeté sous forte pression, la composition d'un tel laitier de haut fourneau étant, d'une manière générale la suivante :

| | |
|---|---|
| CaO | 39 à 46% |
| $SiO_2$ | 30 à 37% |
| $Al_2O_3$ | 10 à 13% |
| MgO | 2 à 7% |
| Fe | 0,3 à 2% |
| + divers | |

Le laitier granulé ainsi traité se présente sous la forme d'un sable de granulométrie inférieure à 0,5mm; le laitier peut être utilisé tel quel ou encore après un léger broyage donnant une granulométrie inférieure à 0/2mm.

Le laitier granulé, traité par broyage, ou non traité, à la faculté de faire prise en milieu basique.

Le mélange ternaire précité, -bouillie de phosphogypse-soude-laitier granulé- est réalisé dans un malaxeur 10 (figure 2) et les dosages des constituants sont variables et ajustés en fonction de l'acidité de la bouillie de phosphogypse d'une part, et en fonction des caractéristiques mécaniques souhaitées des éléments de construction d'autre part.

L'apport de laitier granulé de structure sableuse, au mélange phosphogypse-soude a la particularité d'accélérer le drainage de l'eau dans la masse de l'élément au moment de son moulage qui est effectué sous pression, avec ou sans vibration , puis de procurer à l'élément, après sa prise, sous l'action combinée de la soude et du gypse des résistances en compression et en traction comparables à celles d'un plâtre artificiel antérieur à 28 jours, et supérieures à celles-ci au-delà de cette période de temps.

On constate immédiatement que, comparativement au procédé connu illustré à la figure 1, le procédé selon l'invention (figure 2) élimine pratiquement la totalité des opérations de traitements intermédiaires qui étaient nécessaires jusqu'ici,

puisque l'obtention du produit, prêt au moulage, en partant de phosphogypse est réalisée en une seule opération.

Il sera noté que l'opération de neutralisation du phosphogypse montrée à la figure 1 est également supprimée puisqu'elle se fait, avec le procédé selon l'invention, dans le malaxeur sous l'effet de la soude qui permet également de démarrer le phénomène de prise du laitier.

Différents exemples de compositions sont donnés de manière non limitative dans le tableau ci-après.

| N° | Composition pondérale sèche du mélange en % |
|---|---|
| 1 | 80% phosphogypse neutralisé + 20% laitier + 0,3% soude |
| 2 | 60% phosphogypse neutralisé + 40% laitier + 0,3% soude |
| 3 | 60% phosphogypse neutralisé + 20% laitier + 20% grenette calcaire + 0,3% soude |
| 4 | 85% phosphogypse neutralisé + 15% laitier prébroyé + 0,3% soude |
| 5 | 75% phosphogypse neutralisé + 25% laitier prébroyé + 0,3% soude |

On notera que dans chaque exemple de composition indiquée de 1 à 5 dans le tableau précédent il s'agit de bouillie de phosphogypse ayant déjà subi une neutralisation au cours du traitement pour l'obtention de superphosphate.

On notera également que le phosphogypse subit une neutralisation complémentaire lorsque, placé dans le malaxeur avec les constituants ci-dessus, le mélange est brassé, cette neutralisation complémentaire étant provoquée lors du brassage par la présence de la soude nécessaire à la prise du laitier.

On se reportera maintenant au graphique illustré par la figure 3 dans lequel la résistance à la compression en bars, à 28 jours d'un plâtre artificiel antérieur est indiquée par la plage hachurée, tandis que les caractéristiques mécaniques

des éprouvettes moulées avec des compositions différentes apparaîssant dans le tableau ci-dessus, sont illustrées par les courbes indiquées de 1 & 5.

On constate immédiatement que, à long terme, pour une pression de moulage des éprouvettes à 310 bars, les compositions 2 et 5, ont une résistance à la compression nettement supérieure au plâtre artificiel antérieur, tandis que les compositions 3 et 4 sont sensiblement analogues à un tel plâtre.

Une seule composition, en l'occurrence la composition 1 présente une résistance à la compression inférieure au plâtre artificiel antérieur, mais est néanmoins suffisante pour des applications particulières.

Pour une pression de moulage des éprouvettes à 156 bars et à 38 jours, la résistance à la compression des compositions 2, 3 et 5, est sensiblement égale au plâtre artificiel antérieur, tandis que la résistance à la compression des compositions 1 et 4 sont légèrement inférieures à ce dernier.

Dans le graphique illustré à la figure 4, la plage hachurée indique les caractéristiques mécaniques d'un plâtre artificiel antérieur ; ce graphique met en évidence la résistance à la traction par flexion de deux éprouvettes moulées sous pression avec les compositions préférées 2 et 5 indiquées plus avant.

En lisant ce graphique on constate que les éprouvettes présentent une résistance à la traction par flexion pour une pression de moulage de 156 bars, des caractéristiques mécaniques égales à celles du plâtre artificiel jusqu'à 50 jours et supérieures au delà.

Le procédé suivant l'invention permet donc de réaliser, avec une réponse d'énergie -limitée en pratique au malaxeur- des éléments de construction ayant à long terme, des caractéristiques mécaniques, et de résistance aux intempéries supérieures à celle d'un plâtre artificiel antérieur.

Il va de soi que le produit malaxé est immédiatement transféré dans un moule approprié adapté à exercer sur ledit produit une forte pression, avec ou sans vibrations, et à permettre le drainage de l'élément de construction qui peut

être creux ou plein selon le profil du moule.

Bien entendu l'invention n'est pas limitée aux exemples de réalisation choisis et représentés lesquels peuvent au contraire être susceptibles de modifications sans pour autant sortir du cadre de la présente invention.

REVENDICATIONS

1. Procédé de fabrication d'éléments de construction par moulage sous pression d'un mélange de sulfate de calcium hydraté résidu de traitement de phosphate calcique dit ci-après phosphogypse, et d'un liant hydraulique, caractérisé en ce qu' on ajoute à une bouillie de phosphogypse neutralisé par une matière basique, en poids par rapport au poids sec de la composition, de 15 à 40% de laitier de haut fourneau de type dit granulé, et de 0,2 à 0,5% de soude en excès sur la neutralisation, on mélange dans un malaxeur et on comprime fortement la composition malaxée dans un moule.

2. Procédé suivant la revendication 1, caractérisé en ce que, au cours du malaxage, on ajoute au mélange de phosphogypse et laitier de la soude en quantité suffisante pour neutraliser le phosphogypse et apporter l'excès précité.

3. Procédé selon la revendication 1, caractérisé en ce que on ajoute à la composition précitée de la grenette calcaire.

4. Procédé selon l'une quelconque des revendications 1 et 3, caractérisé en ce que la grenette calcaire est ajoutée au plus à raison de 20% en poids de phosphogypse neutralisé.

5. Procédé selon l'une quelconque des revendications précédentes, caractérisé en ce que le laitier ajouté à la composition se présente sous la forme d'un sable de granulométrie inférieure à 0/5mm.

6. Procédé selon l'une quelconque des revendications précédentes, caractérisé en ce que le laitier entrant dans la composition a subi un traitement de broyage et se présente sous l'aspect d'un sable de granulométrie inférieure à 0/2mm.

FIG. 1

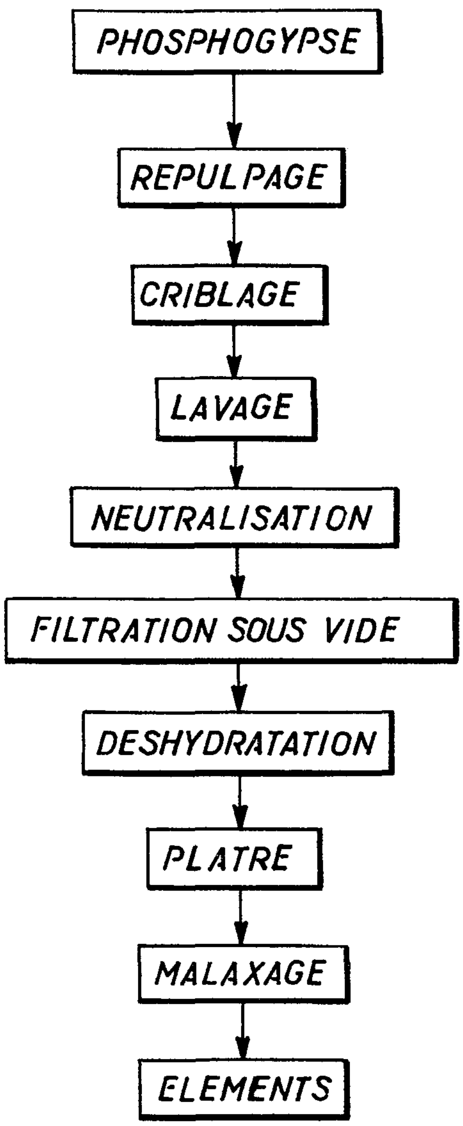
PHOSPHOGYPSE
REPULPAGE
CRIBLAGE
LAVAGE
NEUTRALISATION
FILTRATION SOUS VIDE
DESHYDRATATION
PLATRE
MALAXAGE
ELEMENTS

FIG. 2

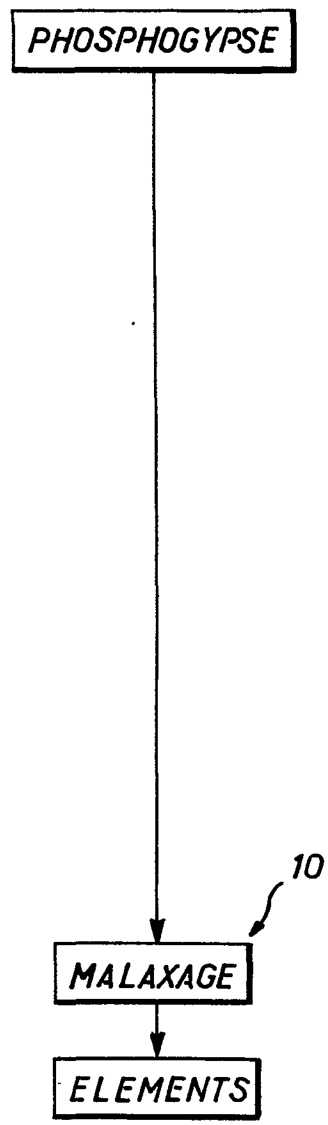
PHOSPHOGYPSE
10
MALAXAGE
ELEMENTS

FIG. 3

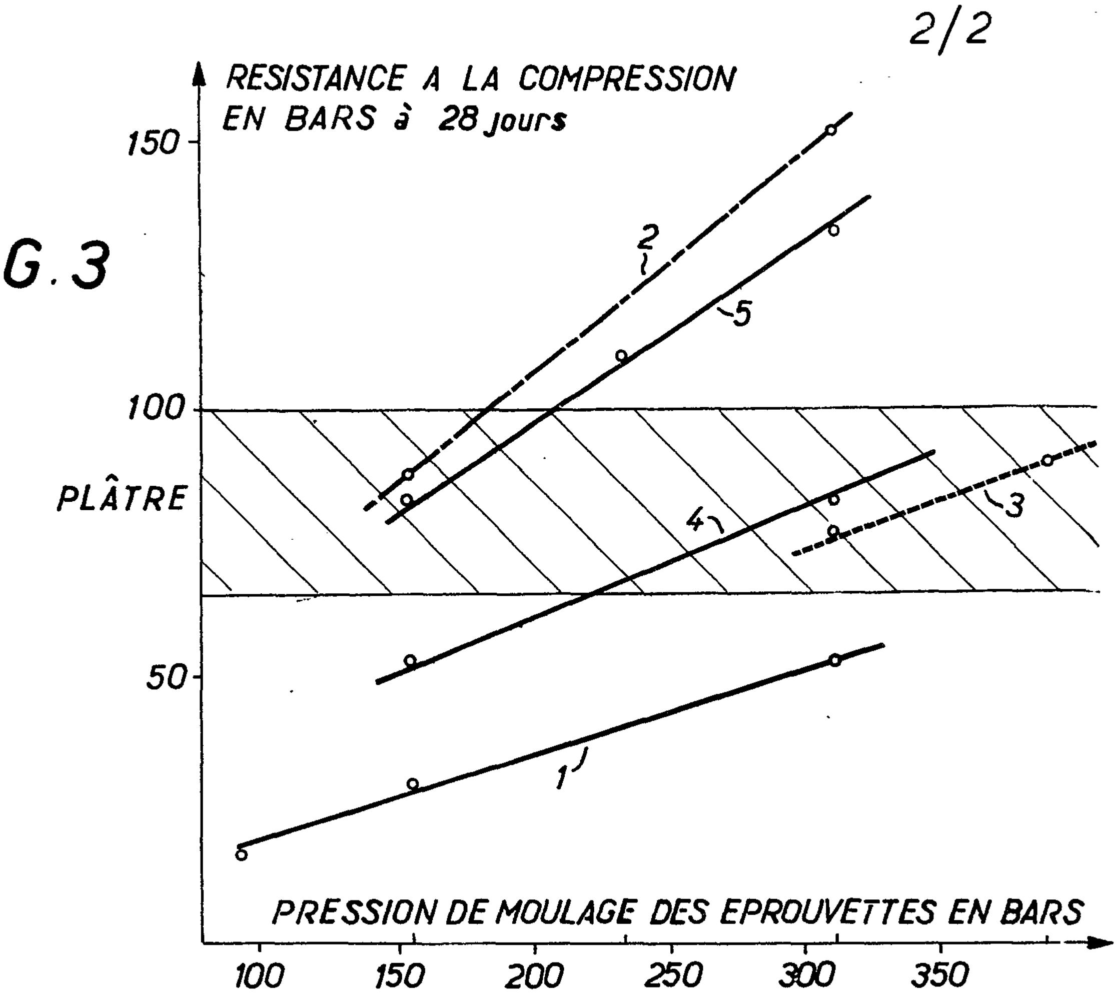
RESISTANCE A LA COMPRESSION
EN BARS à 28 jours
150
100
50
PLÂTRE
2
5
4
3
1
PRESSION DE MOULAGE DES EPROUVETTES EN BARS
100
150
200
250
300
350

FIG. 4

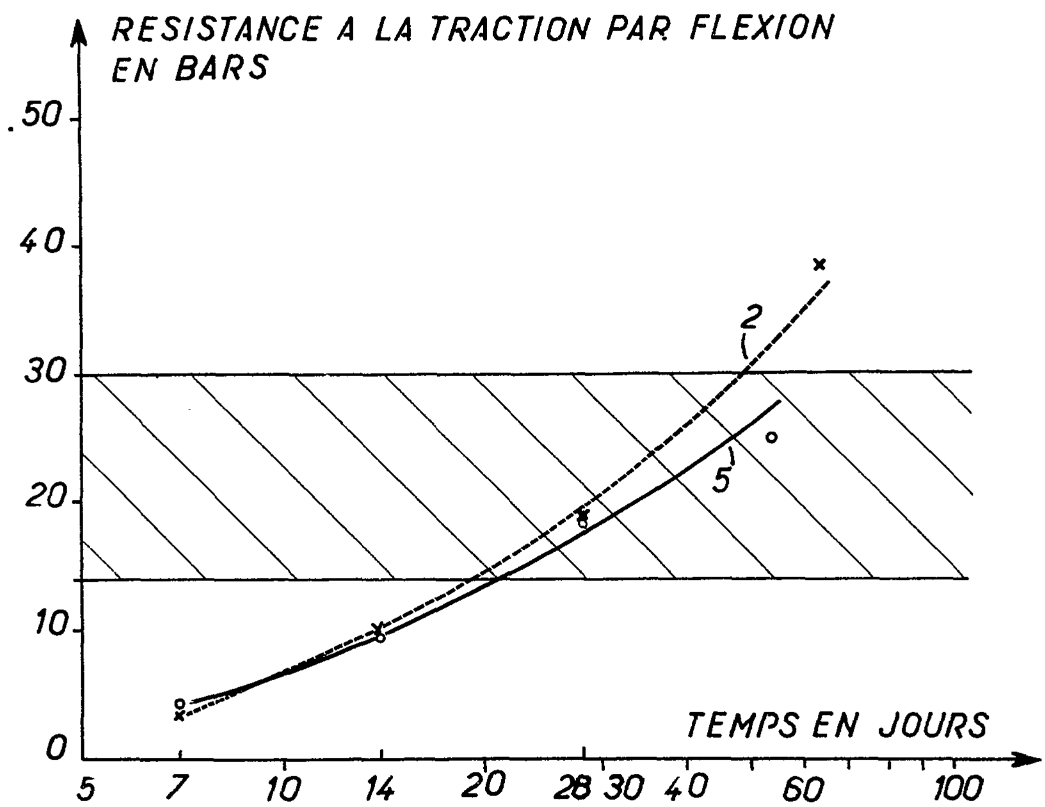
RESISTANCE A LA TRACTION PAR FLEXION
EN BARS
50
40
30
20
10
0
2
5
TEMPS EN JOURS
5
7
10
14
20
28
30
40
60
100

Office européen des brevets

# RAPPORT DE RECHERCHE EUROPEENNE

0023872

Numéro de la demande

EP 80 40 1141

## DOCUMENTS CONSIDERES COMME PERTINENTS

| Catégorie | Citation du document avec indication, en cas de besoin, des parties pertinentes | Revendication concernée |
|---|---|---|
| XD | GB - A - 234 302 (E.C.R. MARKS)<br>* Page 1, lignes 55-92 *<br>-- | 1 |
| XD | NL - A - 74 14904 (UNIE VAN KUNSTMESTFABRIEKEN)<br>* Page 2, lignes 28-34; page 3, lignes 8-10 et 13,14 *<br>-- | 1 |
| | FR - A - 2 281 202 (UNIE VAN KUNSTMESTFABRIEKEN)<br>* Page 6, revendication 1; page 1, lignes 30-33; page 4, lignes 8-10; page 5, lignes 9-13 *<br>-- | 1 |
| | GB - B - 531 469 (V. LEFEBURE)<br>* Page 4, lignes 39-45 et 56-61 *<br>-- | 1 |
| | FR - A - 2 340 284 (SETEC-GEOTECHNIQUE)<br>* Revendications 1,3 *<br>-- | 1,3,4 |
| A | BE - A - 868 621 (CIMENERIES CBR) | |
| A | FR - A - 1 235 188 (GRUBBENS) | |

**CLASSEMENT DE LA DEMANDE (Int. Cl. 3)**

C 04 B 13/00
13/14

**DOMAINES TECHNIQUES RECHERCHES (Int. Cl. 3)**

C 04 B 13/00
7/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 10-11-1980 | DAELEMAN |

OEB Form 1503.1 06.78

BAD ORIGINAL